# EUROPÄISCHE PATENTANMELDUNG

(11) **EP 4 270 330 A1**
(43) Veröffentlichungstag der Anmeldung: **01.11.2023**
(21) Anmeldenummer: 23161664.0
(22) Anmeldetag: 14.03.2023
(51) Int. Cl.: G06V 20/52, G06V 20/56, G06T 7/80

(54) **VERFAHREN ZUM KALIBRIERUNG EINES VERKEHRSLEITSYSTEM UND VERKEHRSLEITSYSTEM**

(30) Priorität: 25.04.2022 DE 102022203992
(71) Anmelder: Continental Automotive Technologies GmbH, 30165 Hannover (DE)
(72) Erfinder: Keck, Patrick, 60488 Frankfurt am Main (DE); Rink, Klaus, 60488 Frankfurt am Main (DE)
(74) Vertreter: Continental Corporation

(57) **Zusammenfassung**

Die Erfindung betrifft ein Verfahren zur Kalibrierung eines Verkehrsleitsystems (10), das zum automatisierten Führen eines Fahrzeugs (14) innerhalb eines Verkehrsbereichs (12) ausgebildet ist, das zum automatisierten Parken eines Fahrzeugs (14) ausgebildet ist, sowie ein solches Verkehrsleitsystem. Das Verkehrsleitsystem (10) weist zumindest einen Überwachungssensor (16) zur Überwachung des Verkehrsbereichs (12), eine Kommunikationseinrichtung (20) zur Kommunikation mit einem Fahrzeug (14), insbesondere zum Senden von Fahranweisungen an das Fahrzeug (14), sowie eine Steuerung (18) zur Verarbeitung der Signale des zumindest einen Überwachungssensors (16) und zur Ermittlung von Fahranweisungen für das Fahrzeug (14), auf. Das Verfahren weist die folgenden Schritte auf:
- Erfassen zumindest eines Objekts (28) im Verkehrsbereich (12) mit dem zumindest einen Überwachungssensor (16) und Speichern der Informationen des Objekts (28),
- Abfrage von Sensorinformationen von zumindest einem Umfeldsensor (30) des Fahrzeugs (14) und prüfen, ob das erfasste Objekt (28) von dem Umfeldsensor (30) erfasst wird,
- Wenn das Objekt (28) von dem Umfeldsensor (30) erfasst wird, Abruf der Informationen des Umfeldsensors (30) zu diesem Objekt am (28), und
- Kalibrierung des Überwachungssensors (16) unter Berücksichtigung der vom Überwachungssensor (16) erfassten Informationen des Objekts (28) und den vom Umfeldsensor (30) des Fahrzeugs (14) erfassten Informationen des Objekts (28).

## Beschreibung

Die Erfindung betrifft ein Verfahren zur Kalibrierung eines Verkehrsleitsystems, das zum automatisierten Führen eines Fahrzeugs innerhalb eines Verkehrsbereichs ausgebildet ist, insbesondere eines Parksystem, das zum automatisierten Parken eines Fahrzeugs ausgebildet ist, wobei das Verkehrsleitsystem zumindest einen Überwachungssensor zur Überwachung des Verkehrsbereichs, eine Kommunikationseinrichtung zur Kommunikation mit einem Fahrzeug, insbesondere zum Senden von Fahranweisungen an das Fahrzeug, sowie eine Steuerung zur Verarbeitung der Signale des zumindest einen Überwachungssensors und zur Ermittlung von Fahranweisungen für das Fahrzeug. Die Erfindung betrifft des Weiteren ein solches Verkehrsleitsystem.

Aus dem Stand der Technik sind Verkehrsleitsysteme bekannt, die innerhalb eines Verkehrsbereichs die Steuerung über ein Fahrzeug übernehmen und diese automatisierte innerhalb des Verkehrsbereichs führen. Das Führen umfasst hierbei das Senden von Fahranweisungen, die von dem Fahrzeug, insbesondere automatisiert, umgesetzt werden. Solche Verkehrsleitsysteme werden beispielsweise für automatisierte Parksysteme verwendet, bei welchen das Fahrzeug dem Parksysteme übergeben wird und von diesem ferngesteuert an einen Abstellplatz innerhalb des Parksystems gefahren wird.

Der Verkehrsraum wird hierbei durch Überwachungssensoren des Verkehrsleitsystems überwacht. Die Überwachungssensoren sind beispielsweise Kameras, die eine optische Erfassung des Verkehrsraums und aller Objekte innerhalb des Verkehrsraums ermöglichen. Das Verkehrsleitsystem hat eine Steuerung, in der eine Karte des Verkehrsraums gespeichert ist. Abhängigkeit von den Informationen der Überwachungssensoren sowie der gespeicherten Karte des Verkehrsraums kann die Steuerung eine Route für das Fahrzeug innerhalb des Verkehrsraums berechnen und über eine Kommunikationseinrichtung entsprechende Fahranweisungen an das Fahrzeug senden. Das Fahrzeug kann diese Fahranweisungen umsetzen und gesteuert durch die Fahranweisungen der von der Steuerung berechneten Route folgen. Das Fahrzeug wird innerhalb des Verkehrsraums, insbesondere während der Fahrt, durch die Überwachungssensoren überwacht, sodass während der Fahrt eine Korrektur der Route bzw. der Fahranweisungen erfolgen kann, beispielsweise bei Abweichungen von der berechneten Route oder bei auf der berechneten Route auftretenden Hindernissen oder Gefahrenstellen.

Die Überwachungssensoren müssen hierbei eine hohe Genauigkeit aufweisen, um die Fahrzeugposition sowie die Fahrzeugausrichtung innerhalb des Verkehrsraums möglichst exakt erfassen und daraus die Fahranweisungen berechnen zu können. Im regulären Betrieb eines solchen Verkehrsleitsystems kann es aber zu Störungen oder Veränderungen an den Überwachungssensoren kommen. Beispielsweise kann die Ausrichtung oder die Position eines Überwachungssensors verändert werden, beispielsweise durch einen Aufprall, einen Zusammenstoß oder fehlerhafte Montage. Eine Veränderung der Position und/oder der Ausrichtung kann aber dazu führen, dass die Position und Ausrichtung eines Fahrzeugs relativ zu anderen Objekten innerhalb des Verkehrsraums, beispielsweise anderen Fahrzeugen oder festen Objekten, nicht ausreichend genau bestimmt werden kann.

Aufgabe der Erfindung ist es, ein Verfahren bereitzustellen, das eine Überprüfung und Kalibrierung des Verkehrsleitsystems, insbesondere der Überwachungssensoren, ermöglicht. Insbesondere soll die Überprüfung und Kalibrierung während des regulären Betriebs des Verkehrsleitsystem erfolgen können. Aufgabe der Erfindung ist es des Weiteren, ein Verkehrsleitsystem bereitzustellen, das eine Überprüfung und Kalibrierung des Verkehrsleitsystems ermöglicht.

Zur Lösung der Aufgabe ist ein Verfahren zur Kalibrierung eines Verkehrsleitsystems, das zum automatisierten Führen eines Fahrzeugs innerhalb eines Verkehrsbereichs ausgebildet ist, insbesondere eines Parksystem, das zum automatisierten Parken eines Fahrzeugs ausgebildet ist, vorgesehen. Das Verkehrsleitsystem weist zumindest einen Überwachungssensor zur Überwachung des Verkehrsbereichs, eine Kommunikationseinrichtung zur Kommunikation mit einem Fahrzeug, insbesondere zum Senden von Fahranweisungen an das Fahrzeug, sowie eine Steuerung zur Verarbeitung der Signale des zumindest einen Überwachungssensors und zur Ermittlung von Fahranweisungen für das Fahrzeug, auf. Das Verfahren weist die folgenden Schritte auf:
- Erfassen zumindest eines Objekts im Parksystem mit dem zumindest einen Überwachungssensor und Speichern der Informationen des Objekts,
- Abfrage von Sensorinformationen von zumindest einem Umfeldsensor des Fahrzeugs und prüfen, ob das erfasste Objekt von dem Umfeldsensor erfasst wird,
- Wenn das Objekt von dem Umfeldsensor erfasst wird, Abruf der Informationen des Umfeldsensors zu diesem Objekt, und
- Kalibrierung des Überwachungssensors unter Berücksichtigung der vom Überwachungssensor erfassten Informationen des Objekts und den vom Umfeldsensor des Fahrzeugs erfassten Informationen des Objekts.

Grundsätzlich erfolgt die Überwachung des Verkehrsbereichs ausschließlich mit den Überwachungssensoren des Verkehrsleitsystems. Der Erfindung liegt die Überlegung zugrunde, die Umfeldsensoren der Fahrzeuge innerhalb des Verkehrsraums zu nutzen, um die Genauigkeit der Überwachungssensoren zu prüfen diese gegebenenfalls zu kalibrieren. Hierzu werden Objekte definiert, die sowohl von den Überwachungssensoren wie auch von den Umfeldsensoren erfasst werden können. Die von den Umfeldsensoren eines Fahrzeugs erfasste Position und/oder die Ausrichtung eines solches Objekts werden mit den von einem Überwachungssensor erfassten Informationen verglichen. Weichen diese Informationen voneinander ab, muss davon ausgegangen werden, dass die Informationen des Überwachungssensors oder die Informationen des Umfeldsensor nicht korrekt sind. Wenn der Umfeldsensor störungsfrei arbeitet und die Position des Fahrzeugs im Verkehrsbereich korrekt ist, muss davon ausgegangen werden, dass die Informationen des Überwachungssensors fehlerhaft sind. Diese können anschließend mit den Informationen des Umfeldsensor korrigiert und somit der Überwachungssensor kalibriert werden.

Beispielsweise kann die Position des Fahrzeugs kann durch weitere Überwachungssensoren verifiziert werden und/oder das Fahrzeug kann eine Eigendiagnosefunktion aufweisen, die die Umfeldsensoren überprüft.

Das Verkehrsleitsystem kann somit auf einfache Weise durch Verwendung der in einer Vielzahl von Fahrzeugen vorhandenen Umfeldsensoren geprüft und kalibriert werden. Es sind keine zusätzlichen Sensoren innerhalb des Verkehrsleitsystems erforderlich. Insbesondere kann die Genauigkeit verbessert werden, wenn die Informationen von Umfeldsensoren mehrere Fahrzeuge und oder die Informationen zu mehreren verschiedenen Objekten verwendet werden. Beispielsweise kann ein Objekt von mehreren Fahrzeugen erfasst werden, so dass die Informationen der Umfeldsensoren der Fahrzeuge zusätzlich miteinander verglichen werden können. Insbesondere können auch die Informationen der Umfeldsensoren und der Überwachungssensoren zu verschiedenen Objekten miteinander verglichen werden, wenn die Umfeldsensoren eines Fahrzeugs mehrere Objekte erfassen.

Vorzugsweise ist zumindest ein Objekt, das von dem zumindest einen Überwachungssensor erfasst werden kann, im Verkehrsbereich vorab definiert. Beispielsweise ist das Objekt ein feststehendes Objekt, insbesondere ein Teil der baulichen Struktur des Verkehrsbereichs. Des Objekts kann beispielsweise eine Säule, eine Mauer oder ein anderes Bauteil sein.

In der Steuerung können die Informationen zu dem zumindest einen Objekt gespeichert sein, wobei die Kalibrierung des Überwachungssensors unter Berücksichtigung der in der Steuerung gespeicherte Position und Ausrichtung des Objekts erfolgt. Beispielsweise ist in der Steuerung eine Karte des Verkehrsbereichs hinterlegt, in der die Position und die Ausrichtung der Objekte gespeichert sind. Dadurch kann beispielsweise auch erkannt werden, ob sich ein Objekt im Erfassungsbereich der Umfeldsensoren eines Fahrzeugs befindet und ein Vergleich der mit dem Umfeldsensor des Fahrzeugs erfassten Informationen des Objekts mit den in der Steuerung gespeicherten und/oder den mit dem Überwachungssensor erfassten Formationen erfolgen kann.

Die Informationen des Objekts können beispielsweise eine Position und/oder eine Ausrichtung innerhalb des Verkehrsbereichs umfassen.

Werden die Objekte vorab definiert, werden vorzugsweise Objekte gewählt, die mit den Überwachungssensoren und den Umfeldsensoren besonders gut erfasst werden können. Beispielsweise werden hierzu Strukturen oder Objekte ausgewählt, die eine Form haben, die eindeutig identifizierbar ist, beispielsweise mit geraden Kanten oder Ecken, die mit Sensoren besonders gut zu erfassen sind. Optional können die Objekte zusätzlich derart hervorgehoben werden, dass eine bessere Erfassung mit den Überwachungssensoren und/oder den Umfeldsensoren erfolgen kann. Eine solche Hervorhebung kann beispielsweise durch eine Struktur, beispielsweise eine Oberflächenstruktur, eine Form, ein besonderes Material und/oder eine farbliche Gestaltung erfolgen.

Zusätzlich können an dem zumindest einen Objekt zusätzliche Elemente zur besseren Erfassung des Objekts mit dem Überwachungssensor und/oder dem Umfeldsensor vorgesehen sind. Beispielsweise können zusätzliche Markierungsmarken oder -strukturen oder Reflektoren an den Objekten vorgesehen sein. Solche Markierungen ermöglichen eine besonders genaue Erfassung der Position und der Orientierung eines Objekts. Reflektoren können zudem die Erkennbarkeit des Objekts für die Sensoren verbessern. Insbesondere können die Objekte derart hervorgehoben werden, dass eine eindeutige Zuordnung der Hervorhebung zu einem Objekt erfolgen kann, um Verwechslungen der Objekte auszuschließen. Insbesondere kann auch die Position der Objekte zu gewählt werden, dass diese besonders gut sowohl von den Überwachungssensoren wie auch von den Umfeldsensoren der Fahrzeuge erfasst werden können.

Die Genauigkeit der Umfeldsensoren eines Fahrzeugs kann von der Entfernung des Objekts zum Fahrzeug abhängig sein. Beispielsweise kann die Genauigkeit der Sensoren mit zunehmender Entfernung des Fahrzeugs zum Objekt abnehmen. Aus diesem Grund kann beispielsweise zusätzlich die Entfernung eines Objekts zum Umfeldsensor des Fahrzeugs geprüft werden. Eine Kalibrierung des Überwachungssensors kann in Abhängigkeit von der Entfernung des Objekts zum Umfeldsensor erfolgen. Beispielsweise kann die Kalibrierung ausgesetzt werden, wenn die Genauigkeit der Informationen des Umfeldsensor nicht für eine Kalibrierung ausreicht. Stellt sich heraus, dass der Umfeldsensor das Objekt mit einer sehr hohen Genauigkeit erfassen kann, beispielsweise weil das Objekt sich sehr nah am Fahrzeug befindet, kann die Kalibrierung mit einer größeren Genauigkeit erfolgen. Beispielsweise kann auch die Entfernung des Objekts zum Fahrzeug als Information des Objekts für die Kalibrierung berücksichtigt werden.

Die Qualität der Erfassung der Objekte mit den Überwachungssensoren und/oder den Umfeldsensoren kann auch von äußeren Einflüssen abhängig sein. Beispielsweise benötigen optische Sensoren häufig eine ausreichende Beleuchtung, um Objekte und Strukturen mit einer ausreichenden Genauigkeit erfassen zu können. Durch die Steuerung des Verkehrsleitsystems können zusätzliche Maßnahmen im Verkehrsraums und/oder des Fahrzeugs veranlasst werden, um das Objekt besser mit dem Überwachungssensor und/oder dem Umfeldsensor erfassen zu können. Beispielsweise kann durch die Steuerung eine Beleuchtung des Verkehrsbereichs veranlasst werden. Diese Beleuchtung kann beispielsweise durch eine im Verkehrsbereich installierte stationäre Beleuchtung erfolgen. Optional können auch die Objekte eine Beleuchtung oder beleuchtete Markierungen aufweisen, die von der Steuerung aktiviert werden können. Die Steuerung kann aber auch entsprechende Anweisungen an das Fahrzeug senden, beispielsweise um die Fahrzeugbeleuchtung einzuschalten. Insbesondere werden diese Maßnahmen in Abhängigkeit der vom Überwachungssensor erfassten Informationen des Objekts und/oder der vom Umfeldsensor des Fahrzeugs erfassten Informationen des Objekts veranlasst, beispielsweise, wenn eine Analyse der Informationen des Objekts durch die Steuerung ergibt, dass die Genauigkeit der Informationen des Objekts nicht ausreichend ist, um eine Kalibrierung durchzuführen.

Als Umfeldsensor können alle im Fahrzeug verwendeten Sensoren verwendet werden, die eine ausreichende Genauigkeit aufweisen. Beispielsweise kann zumindest ein Umfeldsensor ein Ultraschallsensor, ein optischer Sensor oder ein RADAR-Sensor sein.

Die Überwachungssensoren des Verkehrsbereichs können ebenfalls beliebige Sensoren sein. Vorzugsweise ist zumindest ein Überwachungssensor ein optischer Sensor, insbesondere eine Kamera.

Zur Lösung der Aufgabe ist des Weiteren ein Verkehrsleitsystems vorgesehen, das zum automatisierten Führen eines Fahrzeugs innerhalb eines Verkehrsbereichs ausgebildet ist, insbesondere eines Parksystem, das zum automatisierten Parken eines Fahrzeugs ausgebildet ist. Das Verkehrsleitsystem weist zumindest einen Überwachungssensor zur Überwachung des Verkehrsbereichs, eine Kommunikationseinrichtung zur Kommunikation mit einem Fahrzeug, insbesondere zum Senden von Fahranweisungen an das Fahrzeug, sowie eine Steuerung zur Verarbeitung der Signale des zumindest einen Überwachungssensors und zur Ermittlung von Fahranweisungen für das Fahrzeug, auf. Das Verkehrsleitsystem kann mit zumindest einem der vorstehend beschriebenen Verfahren geprüft und kalibriert werden.

Weitere Vorteile und Merkmale ergeben sich aus der nachfolgenden Beschreibung in Verbindung mit den beigefügten Zeichnungen. In diesen zeigen:
- Figur 1: eine schematische Darstellung eines erfindungsgemäßen Verkehrsleitsystems;
- Figur 2: ein Ablaufdiagramm eines Verfahrens zum Prüfen und Kalibrieren des Verkehrsleitsystems aus Figur 1; und
- Figur 3: ein zweites Ablaufdiagramm eines Verfahrens zum Prüfen und Kalibrieren des Verkehrsleitsystems aus Figur 1.

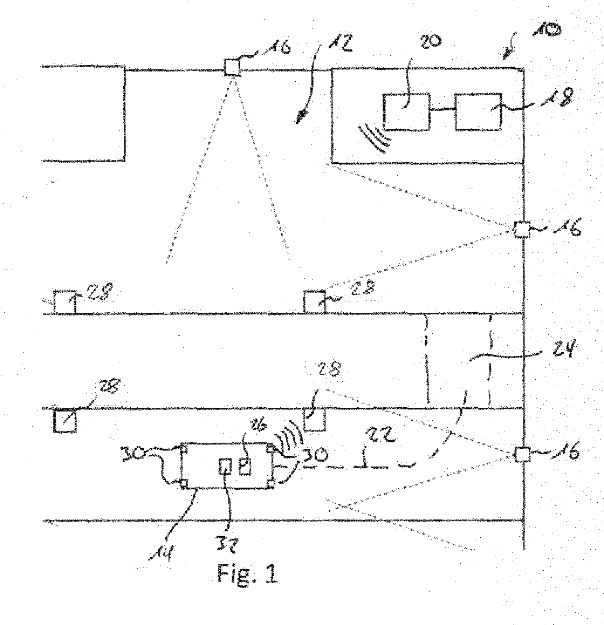

In Figur 1 ist ein Ausschnitt eines Verkehrsleitsystems 10 gezeigt, in der hier gezeigten Ausführungsform ein Parksystem. Das Verkehrsleitsystem 10 hat einen Verkehrsbereich 12, in dem sich Fahrzeuge 14 bewegen können. Die Fahrzeuge 14 werden innerhalb des Verkehrsbereichs 12 vom Verkehrsleitsystem 10 geführt.

Das Verkehrsleitsystem 10 hat mehrere Überwachungssensoren 16 zur Überwachung des Verkehrsbereich 12. Die Überwachungssensoren 16 sind beispielsweise optische Sensoren, insbesondere Kameras, die jeweils ein Bild eines Bereichs des Verkehrsbereichs 12 erstellen. Die Überwachungssensoren 16 sind so angeordnet, dass der gesamte Verkehrsbereich 12 überwacht werden kann.

Das Verkehrsleitsystem 10 hat des Weiteren eine Steuerung 18, die mit den Überwachungssensoren 16 verbunden ist, und die Informationen der Überwachungssensoren 16 verarbeiten kann. In der Steuerung 18 ist beispielsweise eine Karte des Verkehrsbereichs 12 gespeichert. Die Steuerung 18 ist des Weiteren mit einer Kommunikationseinrichtung 20 verbunden, die eine Kommunikation mit den Fahrzeugen 14 aufbauen und Informationen an das Fahrzeug 14 senden oder von diesem empfangen kann.

Die Überwachungssensoren 16 des Verkehrsleitsystems 10 erfassen die Fahrzeuge 14, die sich innerhalb des Verkehrsbereichs 12 befinden. Vorzugsweise müssen sich die Fahrzeuge 14 vorab registrieren und bei der Steuerung 18 anmelden. Die Steuerung 18 ermittelt für die Fahrzeuge 14 einen Fahrweg 22, beispielsweise zu einem Parkplatz 24 für das Fahrzeug 14. Anschließend sendet die Kommunikationseinrichtung 20 entsprechende Fahranweisungen an das Fahrzeug 14. Die Fahrbefehle werden von einer Fahrzeugkommunikationseinrichtung 26 empfangen. Das Fahrzeug 14 fährt anschließend selbstständig bzw. ferngesteuert durch die Steuerung 18 entlang des Fahrwegs 22 zum Parkplatz 24.

Während der Fahrt innerhalb des Verkehrsleitsystems 10 wird die Position, die Orientierung sowie die Bewegungsrichtung des Fahrzeugs 14 durch die Überwachungssensoren 16 überwacht. Zusätzlich wird der gesamte Verkehrsbereich 12 durch die Sensoren überwacht. Die Fahranweisungen können hierbei während der Fahrt des Fahrzeugs 14 angepasst und an das Fahrzeug gesendet werden, beispielsweise, wenn die Steuerung 18 Abweichungen des Fahrzeugs 14 vom berechneten Fahrweg 22 feststellt oder durch die Überwachungssensoren Hindernisse oder Gefahren auf dem Fahrweg erkannt werden.

Die Überwachung des Fahrzeugs 14 muss mit einer sehr hohen Genauigkeit erfolgen, um Zusammenstöße mit anderen Fahrzeugen oder anderen Objekten 28, beispielsweise Säulen oder Mauern, zu verhindern. Während des regulären Betriebs kann es aber zu einer Veränderung der Ausrichtung eines Überwachungssensors 16 kommen, wodurch die Genauigkeit des Überwachungssensors 16 abnimmt.

Um das Verkehrsleitsystem bzw. die Überwachungssensoren 16 zu prüfen, sind innerhalb des Verkehrsbereichs 12 feststehende Objekte 28 definiert, die von den Überwachungssensoren 16 erfasst werden können. Die Informationen diese Objekte werden an die Steuerung 18 übertragen bzw. in dieser gespeichert. Die Informationen können beispielsweise eine Position oder eine Ausrichtung des Objekts 28 sein. Zusätzlich können die Objekte 28 sowie Informationen zu diesem Objekt 28 in der Karte, die in der Steuerung 18 gespeichert ist, hinterlegt sein.

Das Fahrzeug 14 hat Umfeldsensoren 30, mit welchen im regulären Fahrzeugbetrieb die Umgebung des Fahrzeugs 14 erfasst werden kann. Beispielsweise sind die Umfeldsensoren 30 Ultraschallsensoren einer Einparkhilfe. Alternativ können die Umfeldsensoren 30 auch optische Sensoren, RADAR- oder LIDAR-Sensoren sein. Die Umfeldsensoren 30 sind mit einer Fahrzeugsteuerung 32 verbunden.

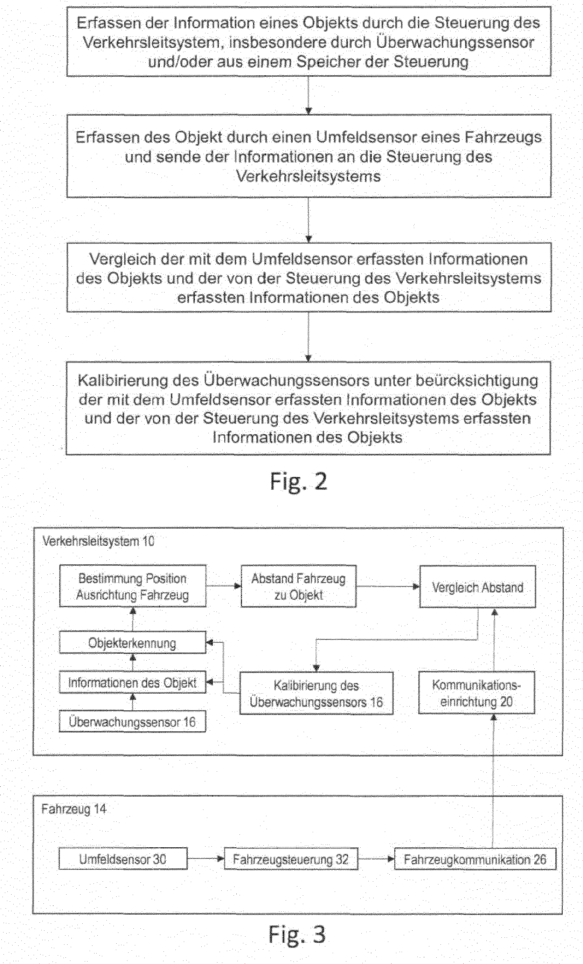

Um die Überwachungssensoren 16 zu prüfen, wird von der Steuerung geprüft, ob sich eines der Objekte 28 im Erfassungsbereich eines Umfeldsensor 30 des Fahrzeugs 14 befindet. Ist dies der Fall, werden die vom Umfeldsensor 30 erfassten bzw. von der Fahrzeugsteuerung 32 verarbeiteten Informationen des Objekts 28 von der Fahrzeugsteuerung 32 abgerufen. Die Fahrzeugsteuerung 32 sendet die Informationen über die Fahrzeugkommunikationseinrichtung 26 an die Kommunikationseinrichtung 20 bzw. die Steuerung 18 (Figur 2).

In der Steuerung 18 werden die vom Umfeldsensor 30 erfassten Informationen des Objekts 28 mit den in der Steuerung gespeicherten oder von den Überwachungssensoren 16 erfassten Informationen des Objekts 28 verglichen.

Weichen diese Informationen voneinander ab, kann zusätzlich geprüft werden, wie zuverlässig die Informationen des Fahrzeugs 14 sind, beispielsweise indem dessen Position durch zusätzliche Überwachungssensoren 16 geprüft wird. Anschließend kann der Überwachungssensor 16 unter Berücksichtigung der mit dem Umfeldsensor 30 erfassten Informationen des Objekts 28 kalibriert werden.

Die Erkennung der Objekte 28 kann hierbei zusätzlich verbessert werden, indem die Objekte 28 derart hervorgehoben werden, dass diese durch den Umfeldsensor 30 und/oder den Überwachungssensor 16 zuverlässiger und genauer erfasst werden können. Beispielsweise können die Objekte 28 eine besondere Struktur oder Form aufweisen. Die Struktur oder Form kann beispielsweise spezielle Kanten oder Flächen aufweisen, die mit dem Umfeldsensor 30 und/oder dem Überwachungssensor 16 besonders gut erfasst und zugeordnet werden können. Beispielsweise können die Objekte 28 auch eine definierte Oberflächenstruktur aufweisen, beispielsweise eine dreidimensionale Struktur, oder in einer bestimmten Farbe oder einem Farbmuster gestrichen sein. Insbesondere kann durch die Struktur eine eindeutige Zuordnung der Objekte 28 erfolgen, das heißt die einzelnen Objekte 28 haben jeweils eine individuelle, unverwechselbare Struktur.

Zusätzlich können an den Objekten 28 auch weitere Elemente vorgesehen sein, die eine bessere Erfassung und Zuordnung des Objekts 28 ermöglichen. Beispielsweise können am Objekt 28 Reflektorelemente vorgesehen sein, die Signale eines aktiven Sensorsystems, das einen Signalsender und einen Signalempfänger aufweist, reflektiert.

Die Elemente können beispielsweise auch aktive Elemente sein, beispielsweise eine Beleuchtung, die von der Steuerung 18 aktiviert wird, um die Erfassung der Objekte 28 zu verbessern.

Optional kann von der Steuerung geprüft werden, ob die Qualität der von dem Umfeldsensor 30 erfassten Informationen sowie der vom Überwachungssensor 16 erfassten Informationen eines Objekts 28 ausreichend ist, um diese miteinander vergleichen und/oder eine Kalibrierung des Überwachungssensors 16 durchzuführen. Ist die Qualität nicht ausreichen, können durch die Steuerung 18 zusätzliche Maßnahmen veranlasst werden, um die Erfassung des Objekts 28 mit dem Umfeldsensor 30 und/oder dem Überwachungssensor 16 zu verbessern. Beispielsweise kann eine zusätzliche Beleuchtung aktiviert werden. Die Beleuchtung kann beispielsweise eine stationäre Beleuchtung des Verkehrsbereichs 12 sein. Optional kann die Steuerung 18 auch eine entsprechende Anweisung an das Fahrzeug 14 senden, um die Fahrzeugbeleuchtung des Fahrzeugs 14 einzuschalten. Insbesondere kann eine solche Beleuchtung eine bessere Hervorhebung von Kanten oder Formen des Objekts 28 bewirken.

Des Weiteren kann zusätzlich der Abstand des Fahrzeugs 14 zum Objekt 28 erfasst werden. Dadurch kann beispielsweise geprüft werden, ob der Abstand des Objekts 28 zum Fahrzeug 14 ausreichend ist, um die Informationen des Objekts 28 mit einer ausreichenden Genauigkeit zu erfassen. Insbesondere können die Informationen des Objekts, die mit dem Umfeldsensor 30 erfasst wurden, in Abhängigkeit von der Entfernung des Fahrzeugs 14 zum Objekt 28 gewichtet werden beziehungsweise bei der Kalibrierung berücksichtigt werden. Insbesondere kann das Fahrzeug 14 auch verschiedene Umfeldsensoren 16 aufweisen, wobei die Informationen der Umfeldsensoren 16 in Abhängigkeit von der Entfernung zum Objekt 28 berücksichtigt bzw. verwendet werden (Figur 3).

## Patentansprüche

1. Verfahren zum Kalibrierung eines Verkehrsleitsystems (10), das zum automatisierten Führen eines Fahrzeugs (14) innerhalb eines Verkehrsbereichs (12) ausgebildet ist, insbesondere eines Parksystem, das zum automatisierten Parken eines Fahrzeugs (14) ausgebildet ist, wobei das Verkehrsleitsystem (10) zumindest einen Überwachungssensor (16) zur Überwachung des Verkehrsbereichs (12), eine Kommunikationseinrichtung (20) zur Kommunikation mit einem Fahrzeug (14), insbesondere zum Senden von Fahranweisungen an das Fahrzeug (14), sowie eine Steuerung (18) zur Verarbeitung der Signale des zumindest einen Überwachungssensors (16) und zur Ermittlung von Fahranweisungen für das Fahrzeug (14), aufweist, mit folgenden Schritten:
- Erfassen zumindest eines Objekts (28) im Verkehrsbereich (12) mit dem zumindest einen Überwachungssensor (16) und Speichern der Informationen des Objekts (28),
- Abfrage von Sensorinformationen von zumindest einem Umfeldsensor (30) des Fahrzeugs (14) und prüfen, ob das erfasste Objekt (28) von dem Umfeldsensor (30) erfasst wird,
- wenn das Objekt (28) von dem Umfeldsensor (30) erfasst wird, Abruf der Informationen des Umfeldsensors (30) zu diesem Objekt am (28), und
- Kalibrierung des Überwachungssensors (16) unter Berücksichtigung der vom Überwachungssensor (16) erfassten Informationen des Objekts (28) und den vom Umfeldsensor (30) des Fahrzeugs (14) erfassten Informationen des Objekts (28).

2. Verfahren nach Anspruch 1, **dadurch gekennzeichnet, dass** vorab zumindest ein Objekt (28) im Verkehrsbereich (12) definiert wird, das von dem zumindest einen Überwachungssensor (16) erfasst werden kann.

3. Verfahren nach Anspruch 2, **dadurch gekennzeichnet, dass** in der Steuerung (18) die Informationen zu dem zumindest einen Objekt (28) gespeichert sind, wobei die Kalibrierung des Überwachungssensors (16) unter Berücksichtigung der in der Steuerung (18) gespeicherten Informationen des Objekts (28) erfolgt.

4. Verfahren nach einem der vorhergehenden Ansprüche, **dadurch gekennzeichnet, dass** die Informationen des Objekts (28) eine Position und/oder eine Ausrichtung innerhalb des Verkehrsbereichs (12) umfassen.

5. Verfahren nach einem der Ansprüche 2 bis 4, **dadurch gekennzeichnet, dass** das zumindest eine Objekt (28) zur besseren Erfassung des Objekts (28) mit dem Überwachungssensor (16) und/oder dem Umfeldsensor (30) hervorgehoben ist, insbesondere durch eine Struktur, Form, Material und/oder Farbe.

6. Verfahren nach einem der Ansprüche 2 bis 5, **dadurch gekennzeichnet, dass** an dem zumindest einen Objekt (28) zusätzliche Elemente zur besseren Erfassung des Objekts (28) mit dem Überwachungssensor (16) und/oder dem Umfeldsensor (30) vorgesehen sind, insbesondere Reflektorelemente.

7. Verfahren nach einem der vorhergehenden Ansprüche, **dadurch gekennzeichnet, dass** die Entfernung des Objekts (28) zum Umfeldsensor (30) des Fahrzeugs (14) geprüft wird und eine Kalibrierung des Überwachungssensors (16) in Abhängigkeit von der Entfernung des Objekts (28) zum Umfeldsensor (30) erfolgt.

8. Verfahren nach einem der vorhergehenden Ansprüche, **dadurch gekennzeichnet, dass** durch die Steuerung (18) zusätzliche Maßnahmen im Verkehrsbereich (12) und/oder des Fahrzeugs (14) veranlasst werden, um das Objekt (28) besser mit dem Überwachungssensor (16) und/oder dem Umfeldsensor (30) erfassen zu können, insbesondere in Abhängigkeit der vom Überwachungssensor (16) erfassten Informationen des Objekts (28) und/oder der vom Umfeldsensor (30) des Fahrzeugs (14) erfassten Informationen des Objekts (28).

9. Verfahren nach einem der vorhergehenden Ansprüche, **dadurch gekennzeichnet, dass** zumindest ein Umfeldsensor (30) ein Ultraschallsensor, ein optischer Sensor oder ein RADAR-Sensor ist.

10. Verfahren nach einem der vorhergehenden Ansprüche, **dadurch gekennzeichnet, dass** zumindest ein Überwachungssensor (16) ein optischer Sensor, insbesondere eine Kamera, ist.

11. Verkehrsleitsystems (10), das zum automatisierten Führen eines Fahrzeugs (14) innerhalb eines Verkehrsbereichs (12) ausgebildet ist, insbesondere eines Parksystem, das zum automatisierten Parken eines Fahrzeugs (14) ausgebildet ist, wobei das Verkehrsleitsystem (10) zumindest einen Überwachungssensor (16) zur Überwachung des Verkehrsbereichs (12), eine Kommunikationseinrichtung (20) zur Kommunikation mit einem Fahrzeug (14), insbesondere zum Senden von Fahranweisungen an das Fahrzeug (14), sowie eine Steuerung (18) zur Verarbeitung der Signale des zumindest einen Überwachungssensors (16) und zur Ermittlung von Fahranweisungen für das Fahrzeug (14), aufweist wobei das Verkehrsleitsystems (10) zur Durchführung eines Verfahrens nach einem der vorhergehenden Ansprüche ausgebildet ist.
